# EUROPEAN PATENT SPECIFICATION

(11) **EP 4 111 308 B1**
(45) Date of publication and mention of the grant of the patent: **26.02.2025**
(21) Application number: 20723343.8
(22) Date of filing: 29.04.2020
(51) Int. Cl.: H04L 45/02, G06F 9/50

(54) **DEVICE AND METHOD FOR LOAD BALANCING**
VORRICHTUNG UND VERFAHREN ZUM LASTAUSGLEICH
DISPOSITIF ET PROCÉDÉ D'ÉQUILIBRAGE DE CHARGE

(43) Date of publication of application: 04.01.2023
(73) Proprietor: Huawei Technologies Co., Ltd., Shenzhen, Guangdong 518129, (CN)
(72) Inventor: PERRIER, Victor, 80992 Munich (DE); HUIN, Nicolas, 80992 Munich (DE); SHI, Lei, 80992 Munich (DE); LEGUAY, Jeremie, 80992 Munich (DE)
(74) Representative: Roth, Sebastian
(86) International application number: PCT/EP2020/061925
(87) International publication number: WO 2021/219214

(56) References cited:
- WILSONPRAKASH S ET AL: "Artificial Neural Network Based Load Balancing On Software Defined Networking", 2019 IEEE INTERNATIONAL CONFERENCE ON INTELLIGENT TECHNIQUES IN CONTROL, OPTIMIZATION AND SIGNAL PROCESSING (INCOS), IEEE, 11 April 2019 (2019-04-11), pages 1 - 4, XP033688671, ISBN: 978-1-5386-9542-5, [retrieved on 20200106], DOI: 10.1109/INCOS45849.2019.8951365

## Description

### TECHNICAL FIELD

The present disclosure relates to communication networks, and more particularly to load balancing of traffic in communication networks. In order to improve network utilization, the disclosure proposes a scalable distributed solution for load balancing.

### BACKGROUND

Load balancing plays a crucial role in improving network utilization. The main principle underlying load balancing is to split traffic over multiple paths, in order to make better use of network capacity.

Typically, load balancing in Internet protocol (IP) networks is implemented inside network devices, such as switches or routers, particularly using two techniques: 1) hash-based splitting, where a hash is calculated over significant fields of packet headers and is used to select the outgoing paths; and 2) weighted cost multi-pathing (WCMP), where load balancing weights are used to make decisions. Both methods are used to ensure that the number of flows on each outgoing path meets a certain ratio. In both cases, once a decision is taken for a flow, all packets from a flow may follow the same decision and, therefore, the same path. However, in practice, the size of flows cannot be known in advance and the distribution of flow sizes is not uniform. In addition, flows have different service-level agreement (SLA) requirements in terms of quality of service (QoS) or quality of experience (QoE). Custom decision policies have to be applied for each type of flows.

Nowadays, for example, software-defined networking (SDN) controllers or path computation elements (PCE) can also integrate traffic engineering methods to continuously optimize routing and load balancing. These centralized control plane entities leverage on a global view of the network to decide whether it is necessary to split flows and to decide the most efficient way to do it, given the statistic on network load and traffic flows. However, centralized solutions suffer from scalability issues in terms of reactiveness (e.g., time to take decisions) and control plane overhead (e.g., CPU utilization, network overhead).

WILSONPRAKASH S ET AL, "Artificial Neural Network Based Load Balancing On Software Defined Networking", 2019 IEEE INTERNATIONAL CONFERENCE ON INTELLIGENT TECHNIQUES IN CONTROL, OPTIMIZATION AND SIGNAL PROCESSING (INCOS), IEEE, 20190411, pages 1 - 4 discloses Dynamic Agent-Based'Load Balancing (DA-LB) on SDN using Back Propagation Artificial Neural Network (BPANN), in order to effectively utilize the available resources.

### SUMMARY

In view of the above-mentioned problems and disadvantages, embodiments of the present disclosure aim to introduce a scalable distributed solution for load balancing. In particular, an objective is to allow network devices, in particular network nodes, to take local load balancing decisions. One aim is to enable interactions between local network devices, in order to reach a similar performance as a centralized solution.

The objective is achieved by the invention as provided in the enclosed independent claims. Advantageous implementations of the invention are further defined in the dependent claims.

A first aspect of the disclosure provides an agent entity for load balancing in a network, wherein the network comprises a plurality of network nodes, wherein the agent entity is associated with a network node of the plurality of network nodes, and the agent entity is configured to collect one or more experience samples related to the network, wherein each of the one or more experience samples comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator, obtain reinforcement learning (RL) policy information from the manager entity, execute the policy information to make a load balancing decision and a decision about a content of a message to one or more other agent entities associated with one or more other network nodes of the plurality of network nodes, wherein the load balancing decision comprises deriving load balancing weights from the RL policy information and selecting a path through the network based on the derived load balancing weights, wherein the content of the message comprises information about the selected path for the incoming flow, and send the message to the one or more other agent entities.

The one or more other agent entities may be configured in the same way as the agent entity of the first aspect.

Accordingly, embodiments of the present disclosure propose a load balancing solution based on local agents (i.e., the agent entities) attached to network nodes. In particular, the local agent entities can decide on which path a flow should be routed. The local agents may exchange messages with each other to cooperate. In addition, it should be noted that there may be one or more agents being attached to one network node.

In particular, the network controller may be a SDN controller. A manager entity, for instance a multi-agent system (MAS), which is hosted in the network controller, may collect time series of experience samples (i.e., history of states, actions, reward, next state) from real devices or from simulated environments. These experience samples may be used for training of reinforcement learning (RL) models that determine the policy information for the agents. Once trained, RL policies are pushed to agents installed in switches.

Notably, the decision may be a set of load balancing weights associated with paths. The weights will be applied for all incoming flows until a new decisions is taken (when an updated policy is executed locally in the device). Then, on a larger time scale, a new policy can be received from the network manager.

In an implementation form of the first aspect, the agent entity is further configured to collect information of the state related to the network, and/or receive a further message from the one or more other agent entities.

Optionally, the agent entity may collect state from the environment and collect further messages from other agent entities.

In an implementation form of the first aspect, the agent entity is further configured to make the decisions based on the collected information of the state related to the network and/or the received further message from the one or more other agent entities.

In an implementation form of the first aspect, the agent entity is further configured to make the load balancing decision using a first neural network model, and/or make the decision about the content of the messages to the one or more other agent entities using a second neural network model.

Optionally, an actor model and a communicator model may be used respectively in this implementation. In one example of the implementation, the communicator may be an actor.

A second aspect of the disclosure provides a manager entity for load balancing in a network, wherein the network comprises a plurality of network nodes, wherein the manager entity is configured to collect one or more experience samples related to the network, wherein each of the one or more experience samples comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator, determine RL policy information based on the collected one or more experience samples, wherein the RL policy information is determined by training an RL model using the collected one or more experience samples, and provide the RL policy information to one or more agent entities, wherein each agent entity is the agent entity according to the first aspect or any of its implementation forms, and is associated with a network node of the plurality of network nodes.

The manager entity enables the agent entities associated with the network nodes to take local load balancing decisions. Thus, the manager entity serves to implement a scalable distributed solution for load balancing.

In an implementation form of the second aspect, the network further comprises a network controller and the manager entity is hosted on the network controller.

In an implementation form of the second aspect, the manager entity is further configured to input the collected one or more experience samples into the RL model to determine the RL policy information, collect one or more updated experience samples related to the network, after the RL policy information has been provided to the one or more agent entities, and input the updated one or more experience samples into the RL model to determine updated RL policy information.

A third aspect of the disclosure provides a load balancing system for a network comprising a plurality of network nodes, wherein the load balancing system comprises a plurality of agent entities of the first aspect or one of the implementation forms of the first aspect, and a manager entity of the second aspect or one of the implementation forms of the second aspect.

A fourth aspect of the disclosure provides a method for load balancing in a network, wherein the network comprises a plurality of network nodes, wherein the method comprises collecting one or more experience samples related to the network, wherein each of the one or more experience samples comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator, obtaining RL policy information from the manager entity, executing the policy information to make a load balancing decision and a decision about a content of message to one or more other agent entities associated with one or more other network nodes of the plurality of network nodes, wherein the load balancing decision comprises deriving load balancing weights from the RL policy information and selecting a path through the network based on the derived load balancing weights, wherein the content of the message comprises information about the selected path for the incoming flow, and sending the message to the one or more other agent entities.

Implementation forms of the method of the fourth aspect may correspond to the implementation forms of the agent entity of the first aspect described above. The method of the fourth aspect and its implementation forms achieve the same advantages and effects as described above for the agent entity of the first aspect and its implementation forms.

A fifth aspect of the disclosure provides a method for load balancing in a network, wherein the network comprises a plurality of network nodes, wherein the method comprises collecting one or more experience samples related to the network, wherein each of the one or more experience samples comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator, determining RL policy information based on the collected one or more experience samples, wherein the RL policy information is determined by training an RL model using the collected one or more experience samples, and providing the RL policy information to one or more agent entities, wherein each agent entity is the agent entity according to the first aspect or any of its implementation forms, and is associated with a network node of the plurality of network nodes.

The manager entity enables the agent entities associated with the network nodes to take local load balancing decisions. Thus, the manager entity serves to implement a scalable distributed solution for load balancing.

In an implementation form of the second aspect, the network further comprises a network controller and the manager entity is hosted on the network controller.

In an implementation form of the second aspect, each of the one or more experience samples comprises one or more of a state, an action, a reward, and a next state.

In an implementation form of the second aspect, the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator.

In an implementation form of the second aspect, the manager entity further comprises a buffer, and the manager entity is further configured to store the collected one or more experience samples in the buffer.

For instance, the buffer may be a conventional experience replay buffer.

In an implementation form of the second aspect, the manager entity is further configured to collect the one or more experience samples from a simulated environment of the network, or from the network.

Notably, the network may be a live network.

In an implementation form of the second aspect, the manager entity is further configured to train a RL model to determine the policy information, by using the collected one or more experience samples.

In an implementation form of the second aspect, the manager entity is further configured to input the collected one or more experience samples into the RL model to determine the policy information, collect one or more updated experience samples related to the network, after the policy information has been provided to the one or more agent entities, and input the updated one or more experience samples into the RL model to determine updated policy information.

In an implementation form of the second aspect, the manager entity is further configured to periodically provide the updated policy information to the one or more agent entities.

A third aspect of the disclosure provides a load balancing system for a network comprising a plurality of network nodes, wherein the load balancing system comprises a plurality of agent entities of the first aspect or one of the implementation forms of the first aspect, and a manager entity of the second aspect or one of the implementation forms of the second aspect.

A fourth aspect of the disclosure provides a method for load balancing in a network, wherein the network comprises a plurality of network nodes, wherein the method comprises collecting one or more experience samples related to the network, obtaining policy information, executing the policy information to make a load balancing decision and a decision about a content of message to one or more other agent entities associated with one or more other network nodes of the plurality of network nodes, and sending the message to the one or more other agent entities.

Implementation forms of the method of the fourth aspect may correspond to the implementation forms of the agent entity of the first aspect described above. The method of the fourth aspect and its implementation forms achieve the same advantages and effects as described above for the agent entity of the first aspect and its implementation forms.

A fifth aspect of the disclosure provides a method for load balancing in a network, wherein the network comprises a plurality of network nodes, wherein the method comprises collecting one or more experience samples related to the network, determining policy information based on the collected one or more experience samples, and providing the policy information to one or more agent entities, wherein each agent entity is associated with a network node of the plurality of network nodes.

Implementation forms of the method of the fifth aspect may correspond to the implementation forms of the manager entity of the second aspect described above. The method of the fifth aspect and its implementation forms achieve the same advantages and effects as described above for the manager entity of the second aspect and its implementation forms.

A sixth aspect of the disclosure provides a computer program product comprising a program code for carrying out, when implemented on a processor, the method according to the fourth aspect and any implementation forms of the fourth aspect, or the fifth aspect and any implementation forms of the fifth aspect.

It has to be noted that all devices, elements, units and means described in the present application could be implemented in software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms of the present disclosure will be explained in the following description of specific embodiments in relation to the enclosed drawings, in which:
- FIG. 1: shows an agent entity according to an embodiment of the disclosure;
- FIG. 2: shows a network and switch architecture;
- FIG. 3: shows a manager entity according to an embodiment of the disclosure;
- FIG. 4: shows a system architecture and interaction between internal components according to an embodiment of the disclosure;
- FIG. 5: shows an architecture of an agent entity according to an embodiment of the disclosure;
- FIG. 6: shows a diagram comparing offline and online training according to an embodiment of the disclosure;
- FIG. 7: shows signals between system components according to an embodiment of the disclosure;
- FIG. 8: shows a procedure for training load balancing agents according to an embodiment of the disclosure;
- FIG. 9: shows a procedure for executing the policy in each load balancing agent according to an embodiment of the disclosure;
- FIG. 10: shows a method according to an embodiment of the disclosure; and
- FIG. 11: shows a method according to an embodiment of the disclosure.

### DETAILED DESCRIPTION OF EMBODIMENTS

Illustrative embodiments of a method, device, and program product for efficient packet transmission in a communication system are described with reference to the figures. Although this description provides a detailed example of possible implementations, it should be noted that the details are intended to be exemplary and in no way limit the scope of the application.

Moreover, an embodiment/example may refer to other embodiments/examples. For example, any description including but not limited to terminology, element, process, explanation and/or technical advantage mentioned in one embodiment/example is applicative to the other embodiments/examples.

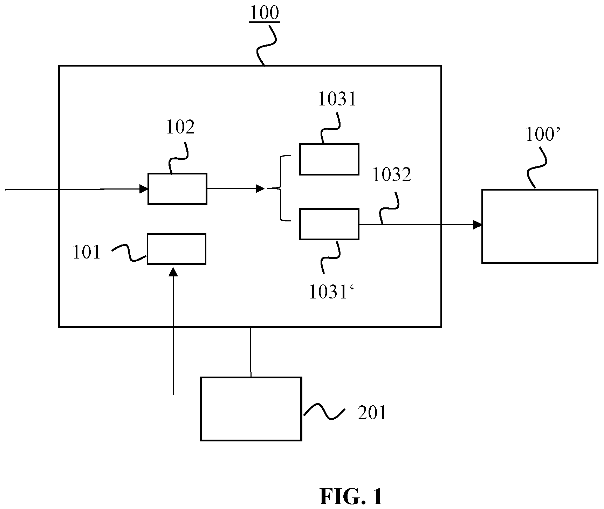

FIG. 1 shows an agent entity 100 adapted for load balancing in a network 200 according to an embodiment of the disclosure. The agent entity 100 may comprise processing circuitry (not shown) configured to perform, conduct or initiate the various operations of the agent entity 100 described herein. The processing circuitry may comprise hardware and software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The agent entity 100 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the agent entity 100 to be performed. In one embodiment, the processing circuitry comprises one or more processors and a non-transitory memory connected to the one or more processors. The non-transitory memory may carry executable program code which, when executed by the one or more processors, causes the agent entity 100 to perform, conduct or initiate the operations or methods described herein.

In particular, the network 200 comprises a plurality of network nodes 201, wherein the agent entity 100 is associated with a network node 201 of the plurality of network nodes 201. The agent entity 100 is configured to collect one or more experience samples 101 related to the network 200. The agent entity 100 is further configured to obtain policy information 102. Further, the agent entity 100 is configured to execute the policy information 102 to make a load balancing decision 1031 and a decision 1031' about a content of a message 1032 to one or more other agent entities 100'. In particular, the one or more other agent entities 100' are associated with one or more other network nodes 201 of the plurality of network nodes 201. The other agent entities 100' may be configured with the same functionality as the agent entity 100. Further, the agent entity 100 is configured to send the message 1032 to the one or more other agent entities 100'. The agent entity 100 may also be configured to receive messages 1032' from the other agent entities 100'. In this way, the agent entities 100, 100' may exchange information to collaborate in making decisions 1031, 1031'.

As traffic evolves over time, the load balancing of traffic may be adjusted to better use network resources. In the state of the art, several solutions have been proposed to solve the load balancing problem.

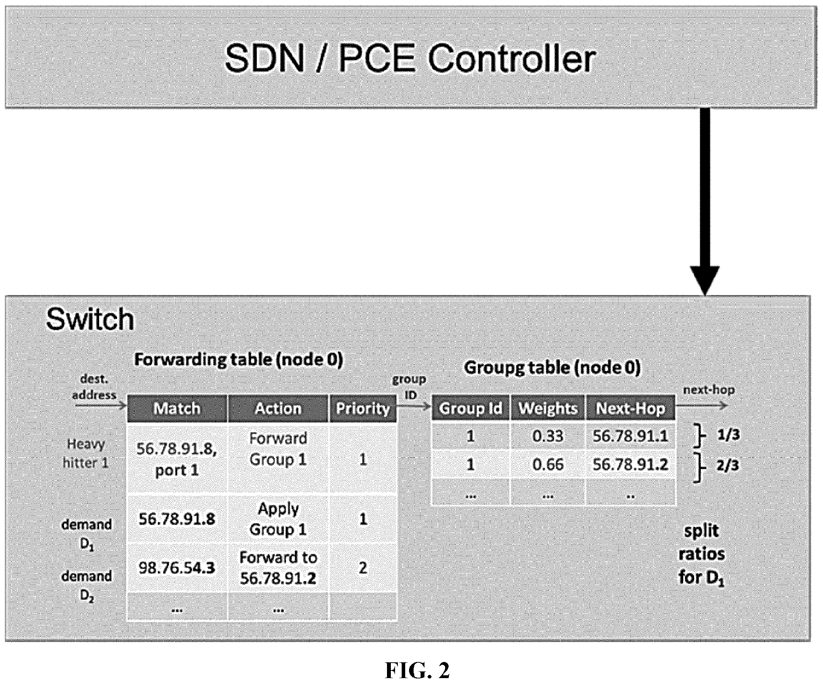

Centralized solutions for SDN or PCE controllers have been proposed to configure network devices with load balancing functionalities based on hash-based splitting or load balancing weights (e.g., unequal cost multi-paths (UCMP) / WCMP). The implementations inside switches of UCMP can leverage on a ternary content access memory (TCAM) for efficient packet processing. The TCAM memory inside the switches is further divided in two tables: the forwarding and the group table, as shown in FIG. 2.

For each incoming packet, the switch looks for the corresponding match in the forwarding table, which specifies if the packet can be directly forwarded or if a specific split may be applied. In the latter case, the switch looks for the corresponding entry of the group table, where, according to the output of the value of a hash computed over afield of the packet, in particular a header of the packet, the next hop is determined. The configuration of entries, also called buckets, in the group table defines the split ratio, i.e., the load balancing, which is used for a specific flow aggregate. In the forwarding table, a priority can be assigned to a flow. Given the global view of the network, the PCE controller can instruct each switch on how to load balance flows and modify flow priorities.

Dynamic priority setting and path selection can also be enforced using segment routing (SR) policies in SR-enabled networks. Typically, load balancing or priority setting is realized at ingress nodes but it can, in principle, be realized on any intermediate node. However, relying on a centralized decision-making affects the scalability.

Load balancing in IP networks is an online decision problem with unknown inputs a priori: 1) impact of traffic engineering decisions on key performance indicators (KPIs) / key quality indicators (KQIs) is unknown, 2) future traffic is not known in advance, and 3) future network conditions (link quality, background traffic) are not known in advance. This is the typical case where a control problem needs to be solved. The optimal policy may be learnt and updated based in the characteristics of the environment, it cannot be found solving a static problem. This problem is a good application use case for RL where the impact of decisions (impact of the environment) is unknown a priori and may be learnt.

Embodiments of the disclosure propose a scalable distributed solution for load balancing that leverages a network (e.g., SDN) controller to 1) calculate and maintain a set of paths on top of which load balancing is realized, and 2) train agent entities 100, 100' associated with network nodes 201 to take local decisions and exchange relevant information to collaborate, for instance messages 1032, 1032'. A main property of the solution is that load balancing decisions can be taken by network nodes 201 using decision making and communication neural network models trained by a centralized network manager.

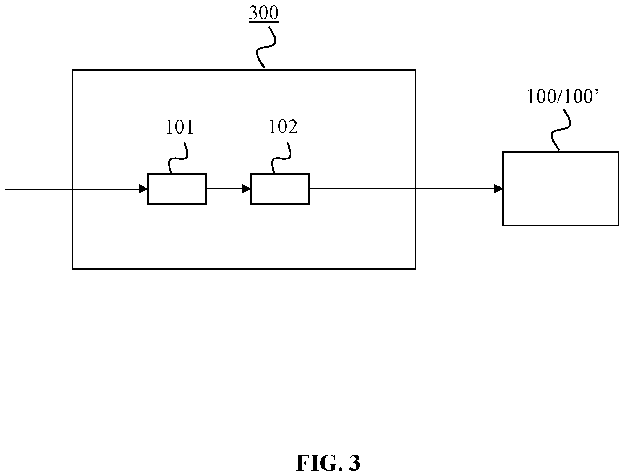

According to another embodiment of the disclosure, a manager entity 300 for load balancing in the network 200 is shown in FIG. 3. In particular, the manager entity 300 is configured to collect one or more experience samples 101 related to the network 200. The manager entity 300 is further configured to determine policy information 102 based on the collected one or more experience samples 101. Further, the manager entity 300 is configured to provide the policy information 102 to one or more agent entities 100, 100'. Possibly, the one or more agent entities 100, 100' may each be an agent entity 100 as shown in FIG. 1.

The disclosure can be logically divided in two parts: one part is implemented locally inside the network node 201, while the other part requires the interaction between the network nodes 201 and a centralized network controller 202 (e.g., SDN controller) for the sake of policy update for agent entities 100, 100'.

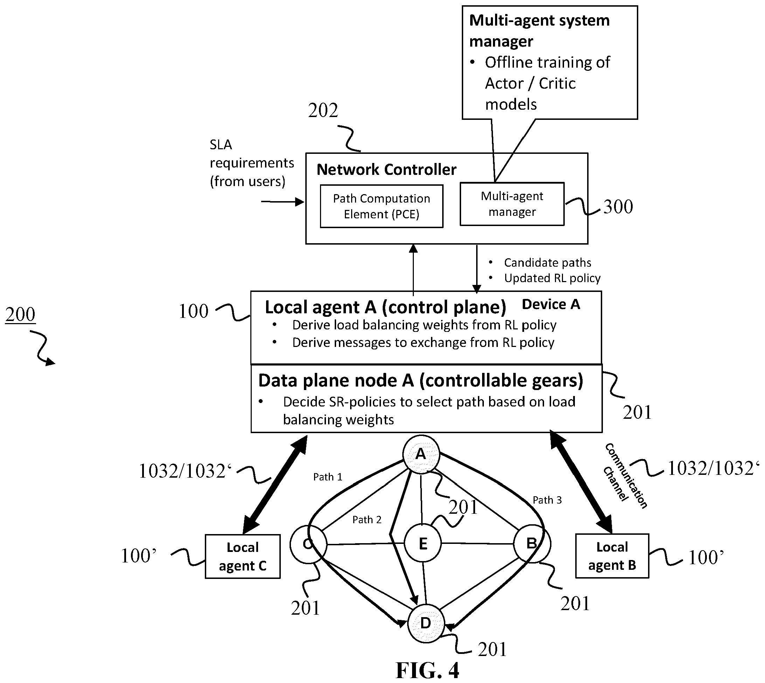

FIG. 4 shows an architecture of network nodes 201 and the network controller 202 in the network 200, and how the different components interact in order to solve the problem of load balancing. In particular, a plurality of agent entities 100, 100' (i.e., Local agents A, B and C) are shown, which are associated with, or attached to, a plurality of network nodes 201 (i.e., Data plane nodes A, B and C, respectively), respectively. In a particular embodiment, Local agent A may be the agent entity 100 as shown in FIG. 1, and Local agents B and C may be the other agent entities 100' as also shown in FIG. 1.

Notably, as shown in FIG. 4, according to an embodiment of the disclosure, the manager entity 300 of FIG. 3 may be hosted on the network controller 202. The manager entity 300 is also referred to as "multi-agent manager", since it can manage the plurality of agent entities 100, 100'. Further, the agent entity 100 may be configured to obtain the policy information 102 from the manager entity 300 of the network controller 202. The manager entity 300 may be configured to train a RL model to determine the policy information 102. Thus the policy information 102 is also referred to as "RL policy" in FIG. 4.

As described above, the agent entity 100 may further execute the policy information 102 received from the manager entity 300 to make a decision 1031' about a content of a message 1032 to one or more other agent entities 100'. In particular, as shown in FIG. 4, the agent entity 100 may derive multiple messages 1032 from the policy information (here the RL policy) and send them to the one or more other agent entities 100'. The agent entity 100 may receive one or more further messages 1032' from the one or more agent entities 100'.

As also described above, the agent entity 100 may further execute the policy information 102 to make a load balancing decision 1031. In particular, as shown in FIG. 4, the agent entity 100 may derive load balancing weights from the policy information 102 (here, the RL policy). The network node 201 (here, the Data plane Node A) may select a path through the network 200 based on the determined load balancing weights. The one or more other agent entities 100' may receive the selected path, in particular, in the message 1032 sent by the agent entity 100.

Optionally, the agent entity 100 may also receive candidate paths from the manager entity 300. For instance, the candidate paths (e.g., the Paths 1, 2 and 3 shown in FIG. 4) are calculated and installed using a path computation element (PCE) hosted in the network controller 202, as shown FIG. 4. The load balancing weights may then be derived by the agent entity 100 based further on the candidate paths, and the network node 201 may select the final path based on the load balancing weights, and thus also based on the candidate paths.

Further, the manager entity 300 may be in charge of an offline training of an Actor model and a Critic model, which models may also be provided to the agent entity 100. Functions of these models are described below in more detail.

In an embodiment, the manager entity 300, e.g., a multi-agent system (MAS) manager as shown in FIG. 3 or 4, which is hosted in the network controller 202, may collect time series of experience samples (i.e., history of states, actions, reward, next state) from real devices or from simulated environment. These experience samples are used for the offline training of RL models that determine agents' policies. Once trained, RL policies (i.e., Actor / Communicator neural networks) are pushed to the agent entities 100 installed in switches. The agent entity 100 shown in FIG. 4 is the agent entity as shown in FIG. 1 or FIG. 3. In this embodiment, each network node 201 may be a switch.

Optionally, inside switches, intelligent agent entities 100, 100' periodically execute the RL policy to 1) decide load balancing weights (e.g., using Actor neural networks) and 2) decide what control messages 1032, 1032' to communicate (e.g., using Communicator neural networks) to other agent entities 100, 100'.

In a possible implementation of this disclosure, it is assumed that one actor and one communicator models (deep neural networks) per origin-destination (OD) flow aggregate with one global critic. Each actor is positioned at the source, and decides about load balancing weighs. The reward can be a linear combination of flow-level KPIs / KQIs (e.g., end-to-end latency, Quality of Experience (QoE)) and network level indicators (e.g., maximum link utilization). The state can be an amount of traffic and the number of active flows on each outgoing path. Each actor has a finite set of outgoing paths on which he can load-balance traffic. The agent entities 100 can communicate with other agent entities 100' over a control channel. A capacity of the control channel may be determined before training. The training also decides the content of messages that need to be exchanged with agent entities 100.

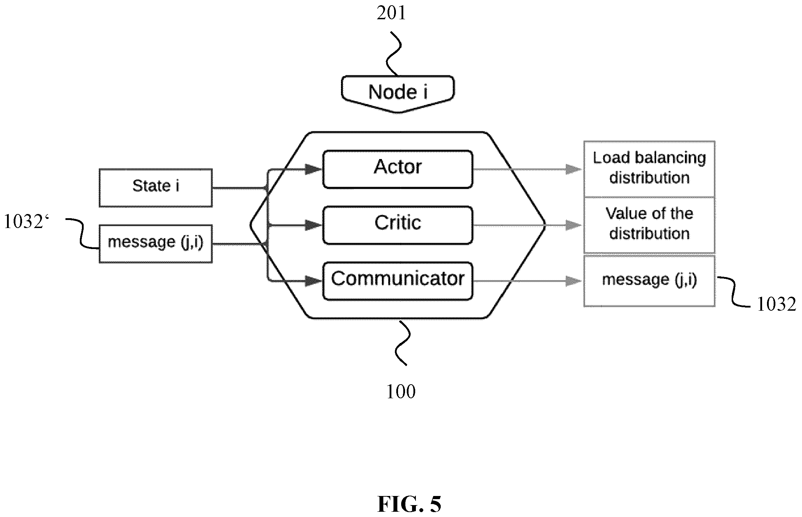

An architecture of an agent entity 100 according to an embodiment of the disclosure is represented in FIG. 5. In particular, the agent entity 100 is associated with Node i, as shown in FIG. 5. In a particular implementation, this Node i is a network node 201 as shown in FIG. 1 or FIG. 4. It can be seen that, based on a current state (e.g., State i as shown in FIG. 5) and a received further message 1032', i.e., received from one or more of the other agent entities 100' ("message (j, i)"), the Actor model of the agent entity 100 may periodically determine a modification of the load balancing distribution. Further, the Critic model of the agent entity 100 may periodically determine a value of the load balancing distribution, and a Communicator model of the agent entity may periodically send messages 1032 ("message j, i")to one or more of the other agent entities 100'. As described above, at least the Actor model and the Critic model may be received from the manager entity 300.

According to embodiments of the disclosure, the training of agent entities 100 may be based on an experience replay buffer in which a collection of experience samples 101 can be stored. In particular, the experience replay buffer stores past experience samples. Data, i.e., experience samples stored in the experience replay buffer can be used for training and stabilizing the training.

Optionally, each experience sample 101 may be a time series, including one or more of the following information:
- State (e.g., number of flows per path, throughput per path, other measurements from telemetry)
- Action (e.g., load balancing weights, messages)
- Reward (e.g., flow-level KPI / KQI, Network utilization)
- Next state (same as state).

Notably, telemetry is a collection of measurements or other data at remote or inaccessible points. These measurements may be automatically transmitted to a receiving device for monitoring. According to an embodiment of the disclosure, the agent entity 100 may collect measurements from telemetry, for instance, from a remote site.

The time series of the experience samples 101 are the raw information used by RL algorithms to train neural network models in agent entities 100. Notably, the data can be collected on a live network or in a simulated environment. In the case of online training, safety provides an advantage when adjusting load balancing decisions, so that the performance of flows are not degraded. In the case of offline training, more random exploration policies are powerful to collect useful experience samples, however, with the limitation that the simulated environment is not a perfect model of reality. In practice, both type of experience samples can be mixed in the experience replay buffer used to train models.

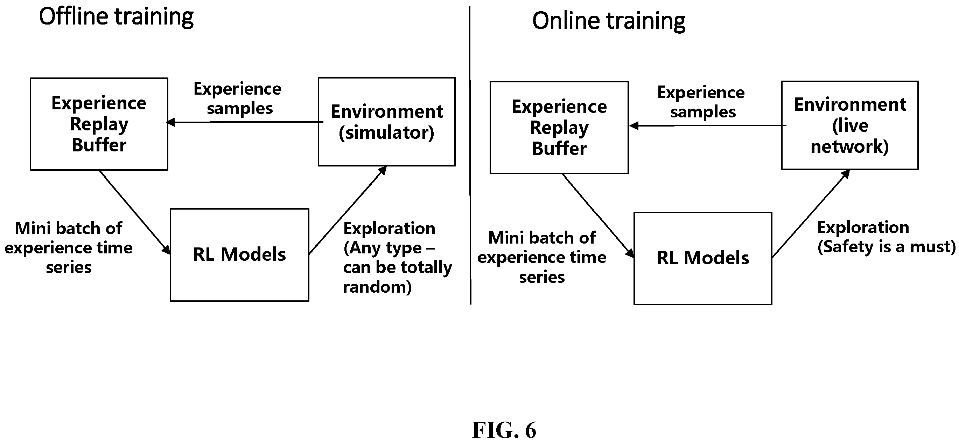

FIG. 6 illustrates the difference between offline and online training, according to embodiments of the disclosure. In particular, in offline training, experience samples 101 may be collected from a simulator, i.e., from a simulated environment of the network 200, and may be stored in an experience replay buffer. The experience samples 101 may be used to train RL models. The RL models can explore the environment, that is, search over a sample space, particularly using random exploration policies. By contrast, in online training, experience samples 101 may be collected from the network 200, (e.g., the live network), and may be stored in an experience replay buffer. The experience samples 101 may be used to train RL models. The RL models can explore the environment, particularly, in a way that safety may be ensured.

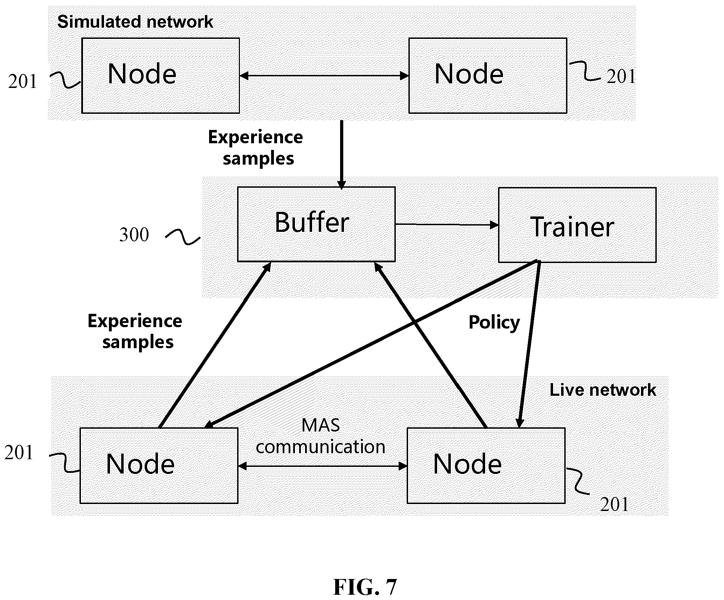

As depicted in FIG. 7, according to an embodiment of the disclosure, the manager entity 300, i.e., MAS manager, may collect experience samples 101 from a simulated network or the live network. That is, experience samples 101 may be collected from a simulated environment of the network 200, and/or from the live network, possibly at the same time. Further, the experience samples 101 may be stored in a buffer, particularly the experience replay buffer, and provided to a trainer. Then, the trainer (i.e., a training module) may jointly train the different neural network models of agent entities 100, and it may push them (as a policy) on network nodes 201.

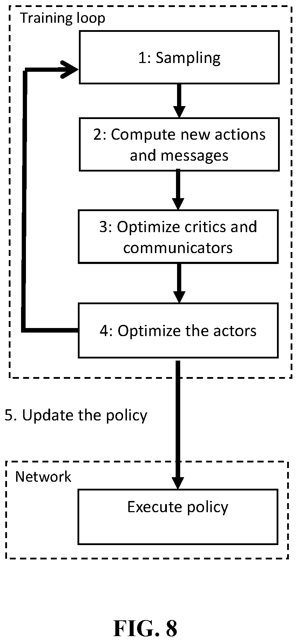

According to an embodiment of the disclosure, a workflow for the manager entity 300 to train the load balancing agent entity 100 is shown in FIG. 8.

In particular, the exemplarily shown steps are the following:
Step 1: Sampling time series from experience buffer
   - (X) the global states, (R) the rewards, (N) the next states
   - (A) the actions (for instance, the action may be one or more changes of the load balancing weights)
Step 2: Update of actions and messages with current policy
   - Compute actions and messages for each time step recursively
   - Messages are initialized at 0 for the first time step
   - Messages and actions are computed with the current version of agents and communicators
Step 3: Optimization of critics and communicators
   - For each time step, optimize the critic and the message passing
   - Update the delayed networks for critics and communicators (this is optional, but helps stabilizing the solution)
Step 4: Optimization of actors
   - Use delayed networks to optimize actors (e.g., using algorithms to balance exploration and exploitation with the use of entropy)
Go back to step 1 (until stabilization of the solution)
Step 5: Push the new policy in all agents

It should be noted that the management system can train agent entities 100, 100' periodically or based on certain events.

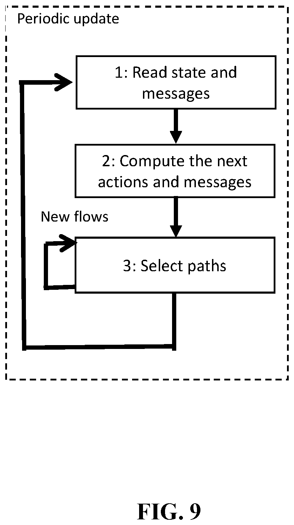

FIG. 9 shows a work flow of an agent entity 100 according to an embodiment of the disclosure, for adjusting load balancing weights (i.e., to execute the policy in a given agent).

In particular, the workflow exemplarily includes the following steps:
Step 1: Read state and messages
   - Collect state from the environment
   - Collect messages from other agents
Step 2: Compute the next action and messages
   - Decide load balancing weights (e.g., calling actor's neural network) and send messages (e.g., calling communicator's neural network)
Step 3: Select a path for each incoming flow
   - Select paths for incoming flows such that the distance to the target distribution of load balancing weight is minimized
Go back to step 1 (every 10s, for instance)

The disclosure also proposes a load balancing system for a network 200 comprising a plurality of network nodes 201. The network 200 may be the network 200 as shown in FIG. 4. The load balancing system comprises a plurality of agent entities 100, each one being an agent entity as shown in FIG. 1, and a manager entity 300 as shown in FIG. 3. Notably, new decisions regarding the load balancing weights will be made according to the updated policy information. That is, the load balancing weights will be updated locally.

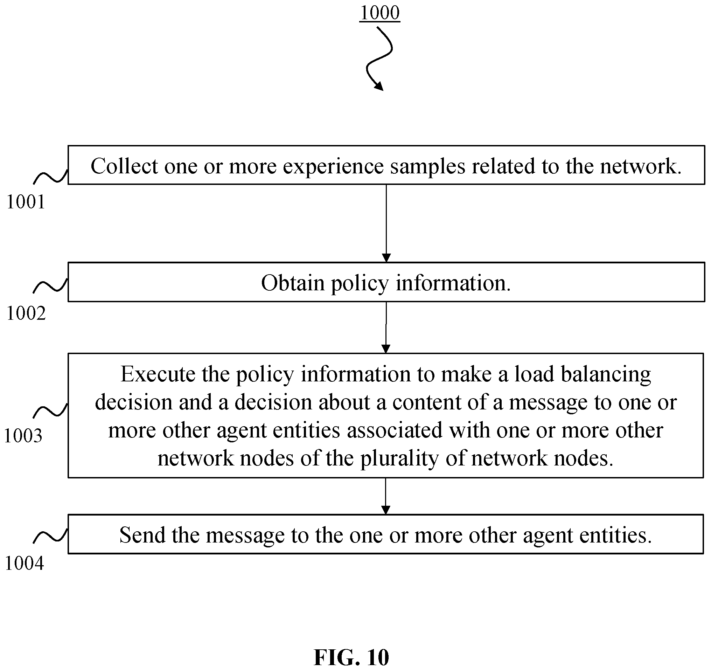

FIG. 10 shows a method 1000 according to an embodiment of the disclosure, particularly for load balancing in a network 200. In a particular embodiment, the method 1000 is performed by an agent entity 100 shown in FIG. 1. In particular, the network 200 comprises a plurality of network nodes 201. The method 1000 comprises a step 1001 of collecting one or more experience samples 101 related to the network 200, a step 1002 of obtaining policy information 102, a step 1003 of executing the policy information 102 to make a load balancing decision 1031 and a decision 1031' about a content of a message 1032 to one or more other agent entities 100' associated with one or more other network nodes 201 of the plurality of network nodes 201, and a step 1004 of sending the message 1032 to the one or more other agent entities 100'.

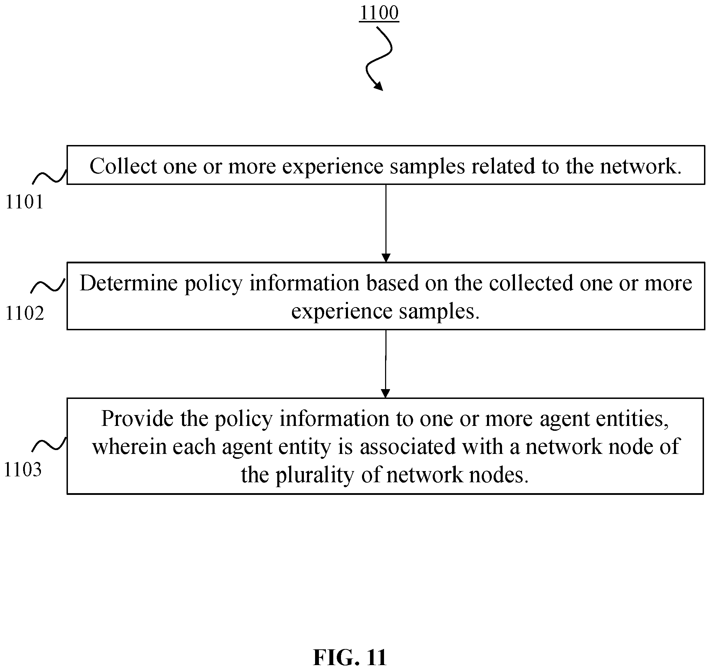

FIG. 11 shows a method 1100 according to an embodiment of the disclosure, particularly for load balancing in a network 200. In a particular embodiment, the method 1100 is performed by a manager entity 300 shown in FIG. 3. In particular, the network 200 comprises a plurality of network nodes 201. The method 1100 comprises a step 1101 of collecting one or more experience samples 101 related to the network 200, a step 1102 of determining policy information 102 based on the collected one or more experience samples 101, and a step 1103 of providing the policy information 102 to one or more agent entities 100, wherein each agent entity 100 is associated with a network node 201 of the plurality of network nodes 201.

In the disclosure, an apparatus and method for load balancing in IP networks are proposed. Embodiments of the disclosure provide a solution based on multiple Deep Reinforcement Learning (DRL) agents hosted in network nodes. In particular, local agents attached to network nodes decide on which path flows should be routed based on a state observed locally and control messages received from other agents. Further, decisions are taken to maximize a reward function that estimates the performance of agents in terms of network utilization and flow quality (QoS, QoE). Agent policies use DRL models that are jointly trained by the network management system based on experience samples.

Decisions taken by agents are typically based on balancing weights, that is, a probability of sending new flows over each outgoing path. In addition, agents can exchange messages to better cooperate. For instance, a fixed capacity control channel may be established between agents. The DRL models determine what to communicate.

To summarize, the proposed method finds an appropriate trade-off by solving the load balancing with a distributed solution. It leverages SDN controllers to 1) calculate and maintain a set of paths on top of which load balancing is realized and 2) train agents hosted in ingress network nodes to take local decisions and exchange relevant information to collaborate. The collaboration between agents allows to reach similar performance to centralized solution, while eliminating the need for a centralized control plane and providing fast adaptability to local characteristics of the environment.

The present disclosure has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as a ROM (Read-Only Memory), a PROM (Programmable Read-Only Memory), an EPROM (Erasable PROM), a Flash memory, an EEPROM (Electrically Erasable PROM), or a hard disk drive.

Moreover, it is realized by the skilled person that embodiments of the agent entity 100 comprises the necessary communication capabilities in the form of e.g., functions, means, units, elements, etc., for performing the solution. Examples of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, trellis-coded modulation (TCM) encoder, TCM decoder, power supply units, power feeders, communication interfaces, communication protocols, etc. which are suitably arranged together for performing the solution.

Especially, the processor(s) of the agent entity 100 may comprise, e.g., one or more instances of a Central Processing Unit (CPU), a processing unit, a processing circuit, a processor, an Application Specific Integrated Circuit (ASIC), a microprocessor, or other processing logic that may interpret and execute instructions. The expression "processor" may thus represent a processing circuitry comprising a plurality of processing circuits, such as, e.g., any, some or all of the ones mentioned above. The processing circuitry may further perform data processing functions for inputting, outputting, and processing of data comprising data buffering and device control functions, such as call processing control, user interface control, or the like.

## Claims

1. An agent entity (100) for load balancing in a network (200), wherein the network (200) is an Internet protocol network and comprises a plurality of network nodes (201), a network controller (202), and a manager entity (300) hosted on the network controller (202), wherein the agent entity (100) is associated with a network node (201) of the plurality of network nodes (201), and the agent entity (100) is configured to:
collect one or more experience samples (101) related to the network (200), wherein each of the one or more experience samples (101) comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator;
obtain reinforcement learning, RL, policy information (102) from the manager entity (300);
execute the RL policy information (102) to make a load balancing decision (1031) and a decision (1031') about a content of a message (1032) to one or more other agent entities (100') associated with one or more other network nodes (201) of the plurality of network nodes (201), wherein the load balancing decision (1031) comprises deriving load balancing weights from the RL policy information (102) and selecting a path through the network (200) based on the derived load balancing weights, wherein the content of the message (1032) comprises information about the selected path for the incoming flow; and
send the message (1032) to the one or more other agent entities (100').

2. The agent entity (100) according to claim 1, further configured to:
collect information of a state related to the network (200); and/or
receive a further message (1032') from the one or more other agent entities (100').

3. The agent entity (100) according to claim 2, further configured to:
make the decisions (1031, 1031') based on the collected information of the state related to the network (200) and/or the received further message (1032') from the one or more other agent entities (100').

4. The agent entity (100) according to one of the claims 1 to 3, further configured to:
make the load balancing decision (1031) using a first neural network model; and/or
make the decision (1031') about the content of the message (1032) to the one or more other agent entities (100') using a second neural network model.

5. A manager entity (300) for load balancing in a network (200), wherein the network (200) is an Internet protocol network and comprises a plurality of network nodes (201), wherein the manager entity (300) is configured to:
collect one or more experience samples (101) related to the network (200), wherein each of the one or more experience samples (101) comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator;
determine reinforcement learning, RL, policy information (102) based on the collected one or more experience samples (101), wherein the RL policy information (102) is determined by training an RL model using the collected one or more experience samples (101); and
provide the RL policy information (102) to one or more agent entities (100, 100'), wherein each agent entity (100, 100') is the agent entity according to any of claims 1 to 4, and is associated with a network node (201) of the plurality of network nodes (201).

6. The manager entity (300) according to claim 5, wherein:
the network (200) further comprises a network controller (202), and the manager entity (300) is hosted on the network controller (202).

7. The manager entity (300) according to claims 5 or 6, further configured to:
input the collected one or more experience samples (101) into the RL model to determine the RL policy information (102);
collect one or more updated experience samples (101) related to the network (200), after the RL policy information (102) has been provided to the one or more agent entities (100, 100'); and
input the updated one or more experience samples (101) into the RL model to determine updated RL policy information (102).

8. A method (1000) for load balancing in a network (200), wherein the network (200) is a communication network and comprises a plurality of network nodes (201), a network controller (202), and a manager entity (300) hosted on the network controller (202), wherein the method (1000) comprises the following steps performed by an agent entity:
collect one or more experience samples (101) related to the network (200), wherein each of the one or more experience samples (101) comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator;
obtaining (1002) reinforcement learning, RL, policy information (102) from the manager entity (300);
executing (1003) the RL policy information (102) to make a load balancing decision (1031) and a decision (1031') about a content of a message (1032) to one or more other agent entities (100') associated with one or more other network nodes (201) of the plurality of network nodes (201), wherein the load balancing decision (1031) comprises deriving load balancing weights from the RL policy information (102) and selecting a path through the network (200) based on the derived load balancing weights, wherein the content of the message (1032) comprises information about the selected path for the incoming flow; and
sending (1004) the message (1032) to the one or more other agent entities (100').

9. A method (1100) for load balancing in a network (200), wherein the network (200) is a communication network and comprises a plurality of network nodes (201), wherein the method (1100) comprises:
collecting (1101) one or more experience samples (101) related to the network (200), wherein each of the one or more experience samples (101) comprises one or more of a state, an action, a reward, and a next state, wherein the state and the next state each comprise one or more of a number of flows per path, a throughput per path, and a measurement from telemetry, the action comprises a change of load balancing weights of the flows, and the reward comprises one or more of a flow level key performance indicator, a flow level key quality indicator, and a network level indicator;
determining (1102) reinforcement learning, RL, policy information (102) based on the collected one or more experience samples (101), wherein the RL policy information (102) is determined by training an RL model using the collected one or more experience samples (101); and
providing (1103) the policy information (102) to one or more agent entities (100, 100'), wherein each agent entity (100, 100') is the agent entity according to any of claims 1 to 4, and is associated with a network node (201) of the plurality of network nodes (201).

10. A computer program product comprising a program code for carrying out, when implemented on a processor, the method (1000, 1100) according to claim 8 or 9.

## Patentansprüche

1. Agentenentität (100) für einen Lastausgleich in einem Netzwerk (200), wobei das Netzwerk (200) ein Internetprotokollnetzwerk ist und eine Vielzahl von Netzwerkknoten (201), eine Netzwerksteuereinheit (202) und eine Verwaltungsentität (300) umfasst, die in der Netzwerksteuereinheit (202) untergebracht ist, wobei die Agentenentität (100) mit einem Netzwerkknoten (201) aus der Vielzahl von Netzwerkknoten (201) assoziiert ist, und wobei die Agentenentität (100) konfiguriert ist zum:
Sammeln einer oder mehrere Erfahrungsstichproben (101) in Bezug auf das Netzwerk (200), wobei jede der einen oder mehreren Erfahrungsstichproben (101) einen oder mehrere eines Zustands, einer Aktion, eines Nutzens und eines nächsten Zustands umfasst, wobei der Zustand und der nächste Zustand jeweils eine oder mehrere einer Anzahl von Datenflüssen pro Pfad, eines Datendurchsatzes pro Pfad und einer Messung von einer Telemetrie umfassen, wobei die Aktion eine Veränderung von Lastausgleichsgewichtungen der Datenflüsse umfasst, und wobei der Nutzen einen oder mehrere einer Leistungskennzahl von Datenflussmengen, einer Qualitätskennzahl von Datenflussmengen und einem Netzwerkebenenindikator umfasst;
Erhalten von Richtlinieninformationen eines Verstärkungslernens, RL-Richtlinieninformationen, (102) von der Verwaltungsentität (300);
Ausführen der RL-Richtlinieninformationen (102), um eine Lastausgleichsentscheidung (1031) und eine Entscheidung (1031') über einen Inhalt einer Nachricht (1032) zu einer oder mehreren anderen Agentenentitäten (100') zu treffen, die mit einem oder mehreren anderen Netzwerkknoten (201) aus der Vielzahl von Netzwerkknoten (201) assoziiert sind, wobei die Lastausgleichsentscheidung (1031) ein Ableiten von Lastausgleichsgewichtungen aus den RL-Richtlinieninformationen (102) und ein Auswählen eines Pfads durch das Netzwerk (200) basierend auf den abgeleiteten Lastausgleichsgewichtungen umfasst, wobei der Inhalt der Nachricht (1032) Informationen über den ausgewählten Pfad für den ankommenden Datenfluss umfasst; und
Senden der Nachricht (1032) zu der einen oder den mehreren anderen Agentenentitäten (100').

2. Agentenentität (100) nach Anspruch 1, die ferner konfiguriert ist zum:
Sammeln von Informationen eines Zustands in Bezug auf das Netzwerk (200); und/oder
Empfangen einer weiteren Nachricht (1032') von der einen oder den mehreren anderen Agentenentitäten (100').

3. Agentenentität (100) nach Anspruch 2, die ferner konfiguriert ist zum:
Treffen der Entscheidungen (1031, 1031') basierend auf den gesammelten Informationen des Zustands in Bezug auf das Netzwerk (200) und/oder der von der einen oder den mehreren anderen Agentenentitäten (100') empfangenen weiteren Nachricht (1032').

4. Agentenentität (100) nach einem der Ansprüche 1 bis 3, die ferner konfiguriert ist zum:
Treffen der Lastausgleichsentscheidung (1031) unter Verwendung eines ersten neuronalen Netzwerkmodells und/oder
Treffen der Entscheidung (1031') über den Inhalt der Nachricht (1032) zu dem einen oder den mehreren anderen Agentenentitäten (100') unter Verwendung eines zweiten neuronalen Netzwerkmodells.

5. Verwaltungsentität (300) für einen Lastausgleich in einem Netzwerk (200), wobei das Netzwerk (200) ein Internetprotokollnetzwerk ist und eine Vielzahl von Netzwerkknoten (201) umfasst, wobei die Verwaltungsentität (300) konfiguriert ist zum:
Sammeln einer oder mehrere Erfahrungsstichproben (101) in Bezug auf das Netzwerk (200), wobei jede der einen oder mehreren Erfahrungsstichproben (101) einen oder mehrere eines Zustands, einer Aktion, eines Nutzens und eines nächsten Zustands umfasst, wobei der Zustand und der nächste Zustand jeweils eine oder mehrere einer Anzahl von Datenflüssen pro Pfad, eines Datendurchsatzes pro Pfad und einer Messung von einer Telemetrie umfassen, wobei die Aktion eine Veränderung von Lastausgleichsgewichtungen der Datenflüsse umfasst, und wobei der Nutzen einen oder mehrere einer Leistungskennzahl von Datenflussmengen, einer Qualitätskennzahl von Datenflussmengen und einem Netzwerkebenenindikator umfasst;
Ermitteln von Richtlinieninformationen eines Verstärkungslernens, RL-Richtlinieninformationen, (102) basierend auf der einen oder den mehreren gesammelten Erfahrungsstichproben (101), wobei die RL-Richtlinieninformationen (102) ermittelt werden, indem ein RL-Modell unter Verwendung der einen oder mehreren gesammelten Erfahrungsstichproben (101) trainiert wird; und
Bereitstellen der RL-Richtlinieninformationen (102) für eine oder mehrere Agentenentitäten (100, 100'), wobei jede Agentenentität (100, 100') die Agentenentität nach einem der Ansprüche 1 bis 4 ist und mit einem Netzwerkknoten (201) aus der Vielzahl von Netzwerkknoten (201) assoziiert ist.

6. Verwaltungsentität (300) nach Anspruch 5, wobei:
das Netzwerk (200) ferner eine Netzwerksteuereinheit (202) umfasst, und wobei die Verwaltungsentität (300) in der Netzwerksteuereinheit (202) untergebracht ist.

7. Verwaltungsentität (300) nach einem der Ansprüche 5 oder 6, die ferner konfiguriert ist zum:
Eingeben der einen oder mehreren gesammelten Erfahrungsstichproben (101) in das RL-Modell, um die RL-Richtlinieninformationen (102) zu ermitteln;
Sammeln einer oder mehrerer aktualisierter Erfahrungsstichproben (101) in Bezug auf das Netzwerk (200), nachdem die RL-Richtlinieninformationen (102) für die eine oder mehreren Agentenentitäten (100, 100') bereitgestellt wurden; und
Eingeben der einen oder mehreren aktualisierten Erfahrungsstichproben (101) in das RL-Modell, um die aktualisierten RL-Richtlinieninformationen (102) zu ermitteln.

8. Verfahren (1000) für einen Lastausgleich in einem Netzwerk (200), wobei das Netzwerk (200) ein Kommunikationsnetzwerk ist und eine Vielzahl von Netzwerkknoten (201), eine Netzwerksteuereinheit (202) und eine Verwaltungsentität (300) umfasst, die in der Netzwerksteuereinheit (202) untergebracht ist, wobei das Verfahren (1000) die folgenden von einer Agentenentität durchgeführten Schritte umfasst:
Sammeln einer oder mehrere Erfahrungsstichproben (101) in Bezug auf das Netzwerk (200), wobei jede der einen oder mehreren Erfahrungsstichproben (101) einen oder mehrere eines Zustands, einer Aktion, eines Nutzens und eines nächsten Zustands umfasst, wobei der Zustand und der nächste Zustand jeweils eine oder mehrere einer Anzahl von Datenflüssen pro Pfad, eines Datendurchsatzes pro Pfad und einer Messung von einer Telemetrie umfassen, wobei die Aktion eine Veränderung von Lastausgleichsgewichtungen der Datenflüsse umfasst, und wobei der Nutzen einen oder mehrere einer Leistungskennzahl von Datenflussmengen, einer Qualitätskennzahl von Datenflussmengen und einem Netzwerkebenenindikator umfasst;
Erhalten (1002) von Richtlinieninformationen eines Verstärkungslernens, RL-Richtlinieninformationen, (102) von der Verwaltungsentität (300);
Ausführen (1003) der RL-Richtlinieninformationen (102), um eine Lastausgleichsentscheidung (1031) und eine Entscheidung (1031') über einen Inhalt einer Nachricht (1032) zu einer oder mehreren anderen Agentenentitäten (100') zu treffen, die mit einem oder mehreren anderen Netzwerkknoten (201) aus der Vielzahl von Netzwerkknoten (201) assoziiert sind, wobei die Lastausgleichsentscheidung (1031) ein Ableiten von Lastausgleichsgewichtungen aus den RL-Richtlinieninformationen (102) und ein Auswählen eines Pfads durch das Netzwerk (200) basierend auf den abgeleiteten Lastausgleichsgewichtungen umfasst, wobei der Inhalt der Nachricht (1032) Informationen über den ausgewählten Pfad für den ankommenden Datenfluss umfasst; und
Senden (1004) der Nachricht (1032) zu der einen oder den mehreren Agentenentitäten (100').

9. Verfahren (1100) für einen Lastausgleich in einem Netzwerk (200), wobei das Netzwerk (200) ein Kommunikationsnetzwerk ist und eine Vielzahl von Netzwerkknoten (201 umfasst, wobei das Verfahren (1100) Folgendes umfasst:
Sammeln (1101) einer oder mehrere Erfahrungsstichproben (101) in Bezug auf das Netzwerk (200), wobei jede der einen oder mehreren Erfahrungsstichproben (101) einen oder mehrere eines Zustands, einer Aktion, eines Nutzens und eines nächsten Zustands umfasst, wobei der Zustand und der nächste Zustand jeweils eine oder mehrere einer Anzahl von Datenflüssen pro Pfad, eines Datendurchsatzes pro Pfad und einer Messung von einer Telemetrie umfassen, wobei die Aktion eine Veränderung von Lastausgleichsgewichtungen der Datenflüsse umfasst, und wobei der Nutzen einen oder mehrere einer Leistungskennzahl von Datenflussmengen, einer Qualitätskennzahl von Datenflussmengen und einem Netzwerkebenenindikator umfasst;
Ermitteln (1102) von Richtlinieninformationen eines Verstärkungslernens, RL-Richtlinieninformationen, (102) basierend auf der einen oder den mehreren gesammelten Erfahrungsstichproben (101),
wobei die RL-Richtlinieninformationen (102) ermittelt werden, indem ein RL-Modell unter Verwendung der einen oder mehreren gesammelten Erfahrungsstichproben (101) trainiert wird; und
Bereitstellen (1103) der Richtlinieninformationen (102) für eine oder mehrere Agentenentitäten (100, 100'), wobei jede Agentenentität (100, 100') die Agentenentität nach einem der Ansprüche 1 bis 4 ist und mit einem Netzwerkknoten (201) aus der Vielzahl von Netzwerkknoten (201) assoziiert ist.

10. Computerprogrammprodukt, das einen Programmcode umfasst, um, wenn er in einem Prozessor implementiert wird, das Verfahren (1000, 1100) nach Anspruch 8 oder 9 auszuführen.

## Revendications

1. Entité d'agent (100) pour un équilibrage de charge dans un réseau (200), le réseau (200) étant un réseau de protocole Internet et comprenant une pluralité de noeuds de réseau (201), un contrôleur de réseau (202), et une entité de gestionnaire (300) hébergée sur le contrôleur de réseau (202), l'entité d'agent (100) étant associée à un noeud de réseau (201) de la pluralité de noeuds de réseau (201), et l'entité d'agent (100) étant configurée pour :
collecter un ou plusieurs échantillons d'expérience (101) liés au réseau (200), chacun des un ou plusieurs échantillons d'expérience (101) comprenant un ou plusieurs éléments parmi un état, une action, une récompense, et un état suivant, l'état et l'état suivant comprenant chacun un ou plusieurs éléments parmi un nombre de flux par trajet, un débit par trajet, et une mesure provenant d'une télémesure, l'action comprenant un changement de poids d'équilibrage de charge des flux, et la récompense comprenant un ou plusieurs éléments parmi un indicateur de performance de clé de niveau de flux, un indicateur de qualité de clé de niveau de flux, et un indicateur de niveau de réseau ;
obtenir des informations de politique d'apprentissage par renforcement, RL (102) en provenance de l'entité de gestionnaire (300) ;
exécuter les informations de politique RL (102) pour prendre une décision d'équilibrage de charge (1031) et une décision (1031') concernant un contenu d'un message (1032) à une ou plusieurs autres entités d'agent (100') associées à un ou plusieurs autres noeuds de réseau (201) de la pluralité de noeuds de réseau (201), la décision d'équilibrage de charge (1031) comprenant la dérivation de poids d'équilibrage de charge à partir des informations de politique RL (102) et la sélection d'un trajet à travers le réseau (200) sur la base des poids d'équilibrage de charge dérivés, le contenu du message (1032) comprenant des informations concernant le trajet sélectionné pour le flux entrant ; et
envoyer le message (1032) aux une ou plusieurs autres entités d'agent (100').

2. Entité d'agent (100) selon la revendication 1, configurée en outre pour :
collecter des informations d'un état lié au réseau (200) ; et/ou
recevoir un message supplémentaire (1032') en provenance des une ou plusieurs autres entités d'agent (100').

3. Entité d'agent (100) selon la revendication 2, configurée en outre pour :
prendre les décisions (1031, 1031') sur la base des informations collectées de l'état lié au réseau (200) et/ou du message supplémentaire (1032') reçu en provenance des une ou plusieurs autres entités d'agent (100').

4. Entité d'agent (100) selon l'une des revendications 1 à 3, configurée en outre pour :
prendre la décision d'équilibrage de charge (1031) à l'aide d'un premier modèle de réseau neuronal ; et/ou
prendre la décision (1031') concernant le contenu du message (1032) aux une ou plusieurs autres entités d'agent (100') à l'aide d'un deuxième modèle de réseau neuronal.

5. Entité de gestionnaire (300) pour un équilibrage de charge dans un réseau (200), le réseau (200) étant un réseau de protocole Internet et comprenant une pluralité de noeuds de réseau (201), l'entité de gestionnaire (300) étant configurée pour :
collecter un ou plusieurs échantillons d'expérience (101) liés au réseau (200), chacun des un ou plusieurs échantillons d'expérience (101) comprenant un ou plusieurs éléments parmi un état, une action, une récompense, et un état suivant, l'état et l'état suivant comprenant chacun un ou plusieurs éléments parmi un nombre de flux par trajet, un débit par trajet, et une mesure provenant d'une télémesure, l'action comprenant un changement de poids d'équilibrage de charge des flux, et la récompense comprenant un ou plusieurs éléments parmi un indicateur de performance de clé de niveau de flux, un indicateur de qualité de clé de niveau de flux, et un indicateur de niveau de réseau ;
déterminer des informations de politique d'apprentissage par renforcement, RL (102) sur la base des un ou plusieurs échantillons d'expérience (101) collectés, les informations de politique RL (102) étant déterminées par entraînement d'un modèle RL à l'aide des un ou plusieurs échantillons d'expérience (101) collectés ; et
fournir les informations de politique RL (102) à une ou plusieurs entités d'agent (100, 100'), chaque entité d'agent (100, 100') étant l'entité d'agent selon l'une quelconque des revendications 1 à 4, et étant associée à un noeud de réseau (201) de la pluralité de noeuds de réseau (201).

6. Entité de gestionnaire (300) selon la revendication 5, dans laquelle :
le réseau (200) comprend en outre un contrôleur de réseau (202), et l'entité de gestionnaire (300) est hébergée sur le contrôleur de réseau (202).

7. Entité de gestionnaire (300) selon la revendication 5 ou la revendication 6, configurée en outre pour :
entrer les un ou plusieurs échantillons d'expérience (101) collectés dans le modèle RL pour déterminer les informations de politique RL (102) ;
collecter un ou plusieurs échantillons d'expérience (101) mis à jour liés au réseau (200), après que les informations de politique RL (102) ont été fournies aux une ou plusieurs entités d'agent (100, 100') ; et
entrer les un ou plusieurs échantillons d'expérience (101) mis à jour dans le modèle RL pour déterminer des informations de politique RL (102) mises à jour.

8. Procédé (1000) pour un équilibrage de charge dans un réseau (200), le réseau (200) étant un réseau de communication et comprenant une pluralité de noeuds de réseau (201), un contrôleur de réseau (202), et une entité de gestionnaire (300) hébergée sur le contrôleur de réseau (202), le procédé (1000) comprenant les étapes suivantes réalisées par une entité d'agent :
collecter un ou plusieurs échantillons d'expérience (101) liés au réseau (200), chacun des un ou plusieurs échantillons d'expérience (101) comprenant un ou plusieurs éléments parmi un état, une action, une récompense, et un état suivant, l'état et l'état suivant comprenant chacun un ou plusieurs éléments parmi un nombre de flux par trajet, un débit par trajet, et une mesure provenant d'une télémesure, l'action comprenant un changement de poids d'équilibrage de charge des flux, et la récompense comprenant un ou plusieurs éléments parmi un indicateur de performance de clé de niveau de flux, un indicateur de qualité de clé de niveau de flux, et un indicateur de niveau de réseau ;
obtenir (1002) des informations de politique d'apprentissage par renforcement, RL (102) en provenance de l'entité de gestionnaire (300) ;
exécuter (1003) les informations de politique RL (102) pour prendre une décision d'équilibrage de charge (1031) et une décision (1031') concernant un contenu d'un message (1032) à une ou plusieurs autres entités d'agent (100') associées à un ou plusieurs autres noeuds de réseau (201) de la pluralité de noeuds de réseau (201), la décision d'équilibrage de charge (1031) comprenant la dérivation de poids d'équilibrage de charge à partir des informations de politique RL (102) et la sélection d'un trajet à travers le réseau (200) sur la base des poids d'équilibrage de charge dérivés, le contenu du message (1032) comprenant des informations concernant le trajet sélectionné pour le flux entrant ; et
envoyer (1004) le message (1032) aux une ou plusieurs autres entités d'agent (100').

9. Procédé (1100) pour un équilibrage de charge dans un réseau (200), le réseau (200) étant un réseau de communication et comprenant une pluralité de noeuds de réseau (201), le procédé (1100) comprenant :
la collecte (1101) d'un ou de plusieurs échantillons d'expérience (101) liés au réseau (200), chacun des un ou plusieurs échantillons d'expérience (101) comprenant un ou plusieurs éléments parmi un état, une action, une récompense, et un état suivant, l'état et l'état suivant comprenant chacun un ou plusieurs éléments parmi un nombre de flux par trajet, un débit par trajet, et une mesure provenant d'une télémesure, l'action comprenant un changement de poids d'équilibrage de charge des flux, et la récompense comprenant un ou plusieurs éléments parmi un indicateur de performance de clé de niveau de flux, un indicateur de qualité de clé de niveau de flux, et un indicateur de niveau de réseau ;
la détermination (1102) d'informations de politique d'apprentissage par renforcement, RL (102) sur la base des un ou plusieurs échantillons d'expérience (101) collectés, les informations de politique RL (102) étant déterminées par entraînement d'un modèle RL à l'aide des un ou plusieurs échantillons d'expérience (101) collectés ; et
la fourniture (1103) des informations de politique (102) à une ou plusieurs entités d'agent (100, 100'), chaque entité d'agent (100, 100') étant l'entité d'agent selon l'une quelconque des revendications 1 à 4, et étant associée à un noeud de réseau (201) de la pluralité de noeuds de réseau (201).

10. Produit programme d'ordinateur comprenant un code de programme pour effectuer, lorsqu'il est mis en oeuvre sur un processeur, le procédé (1000, 1100) selon la revendication 8 ou la revendication 9.
